(19) Europäisches Patentamt
European Patent Office
Office européen des brevets

(11) **EP 4 350 945 A1**

(12) **EUROPEAN PATENT APPLICATION**
published in accordance with Art. 153(4) EPC

(43) Date of publication:
**10.04.2024 Bulletin 2024/15**

(21) Application number: **21947589.4**

(22) Date of filing: **30.06.2021**

(51) International Patent Classification (IPC):
***H02J 50/10*** *(2016.01)*  ***H02J 7/00*** *(2006.01)*

(52) Cooperative Patent Classification (CPC):
**H02J 7/00; H02J 50/10**

(86) International application number:
**PCT/CN2021/103792**

(87) International publication number:
**WO 2023/272636 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• **GUI, Ding
Chengdu, Sichuan 611731 (CN)**
• **HU, Lin
Chengdu, Sichuan 611731 (CN)**

• **ZHAO, Deshuang
Chengdu, Sichuan 611731 (CN)**
• **LIANG, Musheng
Chengdu, Sichuan 611731 (CN)**
• **HUANG, Tao
Shenzhen, Guangdong 518129 (CN)**
• **ZHAO, Ming
Shenzhen, Guangdong 518129 (CN)**
• **JIANG, Weipeng
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **WIRELESS POWER TRANSFER APPARATUS, CHARGER, AND TERMINAL DEVICE**

(57) Embodiments of this application provide a wireless power transfer apparatus, a charger, and a terminal device. The apparatus includes a first control module, a first energy transmission module, and a second energy transmission module. The first control module is connected to the first energy transmission module, and inputs an energy transmission signal to the first energy transmission module. The first energy transmission module is connected to the second energy transmission module, and inputs some of the energy transmission signals obtained from the first control module into the second energy transmission module. Both the energy transmission signal obtained by the first energy transmission signal from the first control module and an energy transmission signal obtained by the second energy transmission module from the first energy transmission module are used to supply power to a target device. A distance between the energy transmission modules is less than a distance between the energy transmission module and the first control module, and the second energy transmission module obtains the energy transmission signal from the first energy transmission module. Therefore, compared with obtaining the energy transmission signal from the first control module, this can reduce a loss of the energy transmission signal during transmission, improve signal transmission efficiency, and improve charging efficiency.

FIG. 2

**Description**

**TECHNICAL FIELD**

Embodiments of this application relate to the field of power supply technologies, and in particular, to a wireless power transfer apparatus, a charger, and a terminal device.

**BACKGROUND**

With rapid development of wireless communication technologies, a quantity of devices such as smartphones, notebook computers, wearable electronic devices, embedded medical devices, and the like is increasing rapidly. This plays an important role in development of all aspects of human beings today. However, power supplying of the foregoing devices is always tough, and supplying power by a battery causes problems such as frequent replacement and high difficulty in battery replacement.

A wireless power transfer manner can resolve the foregoing problem. However, in conventional wireless power transfer technologies, a time reversal wireless power transfer technology (Time Reversal Wireless Power Transfer, TR-WPT) is used, and focuses and transmits radiated microwave energy to a specified location by using a space-time focusing characteristic of time reversal.

Time reversal is transformation in which space coordinates remain unchanged and symbols of time coordinates are changed. In frequency domain, time reversal is equivalent to phase conjugation. In time domain, time reversal is a reverse operation in a time dimension on a time domain signal, that is, the signal is reversed on a time axis, so that a signal obtained through sampling at an earliest moment becomes a signal at a latest moment, and the signal at the latest moment becomes the signal at the earliest moment.

One way to realize time reversal of a signal is to use a time reversal mirror. The time reversal mirror is a sensor array including a limited quantity of sensors distributed in a limited range. In an electromagnetic field, the sensors are mainly antennas. Each sensor in the sensor array may receive a detection signal, performs time reversal processing after receiving the detection signal, and then re-transmits a backhaul signal. In this case, the re-transmitted backhaul signal is obtained by reflecting the detection signal by a mirror that can reverse the signal on a time axis. Therefore, the sensor array is referred to as the time reversal mirror.

In the time reversal wireless power transfer technology, a sensor array is configured to: receive a detection signal, and then perform time reversal processing on an energy transmission signal based on phase information of the detection signal. Then, the sensor array transmits an energy transmission signal on which time reversal processing is performed. An energy transmission signal transmitted by each sensor automatically forms an electromagnetic energy focusing spot at a source point (a location of an energy receiving end) of the detection signal, to supply power to a device at the location of the energy receiving end. Electromagnetic energy density at a location that deviates from the source point of the detection signal decreases rapidly. Wireless power transfer with this spatial electromagnetic energy point focusing characteristic is also referred to as point focusing wireless power transfer.

However, in a current sensor array, sensors are connected in parallel and connected to one control module through coaxial cables, and the control module sends a signal (for example, an energy transmission signal) to each sensor through the coaxial cable.

Because each sensor needs to be connected to the control module through a coaxial cable, and as a quantity of sensors in the sensor array increases, a total length of a coaxial cable between the control module and the sensor array increases significantly, resulting in an obvious increase in a loss on the coaxial cable, reducing transmission efficiency of the sensor array, and reducing power transfer efficiency.

**SUMMARY**

Embodiments of this application provide a wireless power transfer apparatus, a charger, and a terminal device. The wireless power transfer apparatus can reduce a loss of an energy transmission signal during transmission, improve transmission efficiency of the energy transmission signal, and improve power transfer efficiency.

A first aspect of embodiments of this application provides a wireless power transfer apparatus, including a first control module, a first energy transmission module, and a second energy transmission module. The first control module is connected to the first energy transmission module, and the first energy transmission module is connected to the second energy transmission module. The first energy transmission module may be connected to the first control module through a coaxial cable, and a connection manner between the first energy transmission module and the first control module is not limited to a coaxial cable connection manner. Similarly, the first energy transmission module may also be connected to the second energy transmission module through a coaxial cable, and a connection manner between the first energy transmission module and the first energy transmission module is not limited to a coaxial cable connection manner.

The first control module is configured to input a first energy transmission signal to the first energy transmission module. The first energy transmission module is configured to input a second energy transmission signal to the second energy transmission module. The second energy transmission signal is obtained based on the first energy transmission signal, and both the first energy transmission signal and the second energy transmission signal are used to supply power to a target device.

The second energy transmission module obtains the second energy transmission signal from the first energy transmission module instead of obtaining the energy transmission signal from the first control module. Because a distance between the energy transmission modules is usually less than a distance between the energy transmission module and the control module, a length of a coaxial cable required by the second energy transmission module to obtain the second energy transmission signal from the first energy transmission module is less than a length of a coaxial cable required by the second energy transmission module to obtain the energy transmission signal from the first control module. Therefore, this can reduce a loss of the energy transmission signal during transmission, improve signal transmission efficiency, and improve charging efficiency.

In an implementation, the first energy transmission module includes a first power divider. A power divider is a component that divides energy of one input signal into equal or unequal energy of two or more outputs.

The first control module is connected to the first power divider, and the first power divider is connected to the second energy transmission module. The first control module is configured to input the first energy transmission signal to the first power divider. The first power divider is configured to: divide the first energy transmission signal into the second energy transmission signal and a third energy transmission signal, and input the second energy transmission signal to the second energy transmission module. The third energy transmission signal is used to supply power to the target device.

The first power divider is disposed in the first energy transmission module, and the first energy transmission signal is divided into the second energy transmission signal and the third energy transmission signal by the first power divider, so that not only the second energy transmission signal is input to the second energy transmission module, but also the third energy transmission signal can be used to supply power to the target device.

In an implementation, the first energy transmission module further includes a first array element. An array element may be understood as an antenna radiating element including an antenna. The first power divider is connected to the first array element. The first power divider is configured to input the third energy transmission signal to the first array element. The first array element is configured to transmit, in a first state, the third energy transmission signal, to supply power to the target device.

The first array element transmits the third energy transmission signal, to implement wireless power supply to the target device.

In an implementation, the first energy transmission module further includes a second power divider. The first array element is connected to the second power divider. The first array element is further configured to: receive, in a second state, a first detection signal from the target device, and input the first detection signal to the second power divider. There may be a plurality of forms of the first detection signal. This is not specifically limited in this embodiment of this application. For example, the first detection signal may be represented as $S = sin(t)$, where t indicates time.

The second power divider is configured to: divide the first detection signal into a second detection signal and a third detection signal, and input the second detection signal to the second energy transmission module. The second detection signal may be used to extract phase information of a detection signal received by the second energy transmission module. The third energy transmission signal is obtained by processing the first energy transmission signal based on phase information of the third detection signal. Energy of the third detection signal may be the same as or different from energy of the second detection signal. When the energy of the third detection signal is different from the energy of the second detection signal, a ratio of the energy of the third detection signal to the energy of the second detection signal may be adjusted based on an actual requirement. For example, the ratio of the energy of the third detection signal to the energy of the second detection signal may be 1:1, 2:1, or 1:2.

The second power divider is configured to: divide the first detection signal received by the first array element into the second detection signal and the third detection signal, and send the second detection signal to the second energy transmission module, so that the second energy transmission module can use the second detection signal as a reference signal to extract the phase information of the received detection signal without obtaining the reference signal from the first control module. This reduces processing tasks of the first control module and reduces load of the first control module.

In an implementation, the second power divider is configured to divide the first detection signal into the second detection signal and the third detection signal that have equal energy.

The second detection signal may be used as the reference signal, and is used to extract the phase information of the detection signal received by the second energy transmission module. Therefore, if a structure of the second energy transmission module is the same as that of the first energy transmission module, that is, the second energy transmission module also divides the received detection signal into two detection signals with equal energy, and extracts phase information based on one detection signal and the second detection signal, energy of the detection signal is equal to that of the second detection signal. This avoids that the extracted phase information is inaccurate because the energy of the detection signal is not equal to that of the second detection signal.

In an implementation, the first energy transmission module further includes a first switch submodule. The first array element is connected to the second power divider by using the first switch submodule. The first power divider is connected to the first array element by using the first switch submodule. A second control module is configured to control the first switch submodule, so that the first array element inputs, in the second state, the first detection signal to the second power divider, and is configured to control the first switch submodule, so that the first power divider inputs, in the first state, the third energy transmission signal to the first array element.

The first array element is not only configured to receive the first detection signal, but also configured to transmit the third energy transmission signal. Switching between the two states of the first array element is implemented by the second switch submodule. Therefore, this does not cause a complex structure of the apparatus provided in this embodiment of this application, and does not cause an obvious increase in a size and weight of the apparatus provided in this embodiment of this application. In addition, the first switch submodule is controlled by the second control module instead of the first control module. This can reduce load of the first control module, reduce an amount of information that needs to be stored and processed by the first control module, and implement quick control on the first array element.

In an implementation, the first energy transmission module further includes a second switch submodule. The second power divider is connected to the second energy transmission module by using the second switch submodule. The first power divider is connected to the second energy transmission module by using the second switch submodule. The second control module is configured to control the second switch submodule, so that the second power divider inputs the second detection signal to the second energy transmission module, and is configured to control the second switch submodule, so that the first power divider inputs the second energy transmission signal to the second energy transmission module.

In this embodiment, the second power divider and the first power divider can be controlled by the second switch submodule. This does not cause a complex structure of the apparatus provided in this embodiment of this application, and does not cause an obvious increase in a size and weight of the apparatus provided in this embodiment of this application. In addition, the third switch submodule is controlled by the second control module instead of the first control module. Therefore, this can reduce load of the first control module, reduce an amount of information that needs to be stored and processed by the first control module, and implement quick control on the second power divider and the first power divider.

In an implementation, the first energy transmission module further includes a first phase detector. A phase detector (phase detector) is a component that can identify a phase difference between input signals, and is a circuit that enables an output voltage to have a definite relationship with a phase difference between two input signals. The first phase detector is separately connected to the second power divider and the first control module. The second power divider is configured to input the third detection signal to the first phase detector. The first control module is further configured to input a reference signal to the first phase detector. The first phase detector is configured to extract a first phase difference between the third detection signal and the reference signal. The first phase difference is used to perform time reversal processing on the first energy transmission signal input to the first power divider. The time reversal processing may be understood as obtaining phase shift information based on the first phase difference, and then performing phase shift processing on the first energy transmission signal based on the phase shift information.

In this embodiment, the first phase detector extracts the first phase difference between the third detection signal and the reference signal, to extract phase information of the received first detection signal.

In an implementation, the first energy transmission module further includes the second control module and a first phase shifter. A phase shifter (Phaser) is an apparatus that can adjust a phase of a wave. It may be understood that a signal is essentially a wave. The first control module is connected to the first power divider by using the first phase shifter. The first control module is configured to input the first energy transmission signal to the first phase shifter. The second control module is connected to the first phase detector. The first phase detector is further configured to input the first phase difference to the second control module. The second control module is configured to: perform time reversal processing based on the first phase difference to obtain first phase shift information, and control the first phase shifter based on the first phase shift information to perform phase shift processing on the first energy transmission signal input to the first power divider. The first phase shifter is configured to input a first energy transmission signal on which phase shift processing is performed to the first power divider.

In this embodiment, the second control module performs time reversal processing based on the first phase difference to obtain the first phase shift information, and controls the first phase shifter based on the first phase shift information to perform phase shift processing on the first energy transmission signal input to the first power divider without being controlled by the first control module. Therefore, this can reduce load of the first control module, and reduce an amount of information that needs to be stored and processed by the first control module.

In an implementation, the first energy transmission module further includes a third switch submodule. The first control module is separately connected to the first phase shifter and the first phase detector by using the third switch submodule. The second control module is configured to control the third switch submodule, so that the first control module inputs, in a second state, the reference signal to the first phase detector, and is configured to control the third switch submodule, so that the first control module inputs, in a first state, the first energy transmission signal to the first phase shifter.

The first phase detector and the first phase shifter can be controlled by the third switch submodule. This does not cause a complex structure of the apparatus provided in this embodiment of this application, and does not cause an obvious increase in a size and weight of the apparatus provided in this embodiment of this application. In addition, the third switch submodule is controlled by the second control module instead of the first control module. Therefore, this can reduce load of the first control module, reduce an amount of information that needs to be stored and processed by the first control module, and implement quick control on the first phase detector and the first phase shifter.

In an implementation, the first energy transmission module further includes the second control module and a first phase shifter. The first power divider is connected to the first array element by using the first phase shifter. The second control module is separately connected to the first phase detector and the first control module. The first phase detector is further configured to input the first phase difference to the second control module. The second control module is configured to send the first phase difference to the first control module. The first control module is configured to: perform time reversal processing based on the first phase difference to obtain first phase shift information, and send the first phase shift information to the second control module. The second control module is further configured to control the first phase shifter based on the first phase shift information to perform phase shift processing on the third energy transmission signal output by the first power divider. The first phase shifter is configured to input a third energy transmission signal on which phase shift processing is performed to the first array element.

In this embodiment, the first control module performs time reversal processing based on the first phase difference to obtain the first phase shift information, and sends the first phase shift information to the second control module, to implement centralized control on the energy transmission module by the first control module.

In an implementation, the first energy transmission module further includes a first power amplifier. The first control module is connected to the first power divider by using the first power amplifier, and the first power amplifier is configured to amplify the first energy transmission signal output by the first control module. An amplification proportion of the first power amplifier 10 may be adjusted based on an actual requirement. This is not specifically limited in this embodiment of this application.

The second energy transmission signal is obtained based on the first energy transmission signal, and the first energy transmission signal output by the first control module is amplified, so that energy of the second energy transmission signal received by the second energy transmission module is not too low, and energy of the third energy transmission signal that is in the first energy transmission module and that is used to supply power to the target device is not too low.

In an implementation, an amplification factor of the first power amplifier is equal to a ratio of energy of the first energy transmission signal to the energy of the second energy transmission signal.

For example, if the ratio of the energy of the first energy transmission signal to the energy of the second energy transmission signal is 100:1, the amplification proportion of the first power amplifier 10 is 100:1, that is, the first power amplifier 10 amplifies the energy of the received first energy transmission signal by 100 times. If the ratio of the energy of the first energy transmission signal to the energy of the second energy transmission signal is 110:1, the amplification proportion of the first power amplifier 10 is 110:1, that is, the first power amplifier 10 amplifies the energy of the received first energy transmission signal by 110 times.

The amplification factor of the first power amplifier is equal to the ratio of the energy of the first energy transmission signal to the energy of the second energy transmission signal, so that the energy of the first energy transmission signal received by the first energy transmission module is equal to the energy of the second energy transmission signal received by the second energy transmission module, to ensure that power supply capabilities of the first energy transmission module and the second energy transmission module are approximately the same.

In an implementation, the second energy transmission module includes a third power divider. The first energy transmission module is connected to the third power divider. The first energy transmission module inputs the second energy transmission signal to the third power divider. The third power divider is configured to divide the second energy transmission signal into a fourth energy transmission signal and a fifth energy transmission signal, where the fifth energy transmission signal is used to supply power to the target device. When the wireless power transfer apparatus further includes another energy transmission module, the third power divider may input the fourth energy transmission signal to a next-stage energy transmission module.

In an implementation, the second energy transmission module further includes a second array element. The second array element is connected to the third power divider. The third power divider is configured to input the fifth energy transmission signal to the first array element. The first array element is configured to transmit, in a first state, the fifth energy transmission signal, to supply power to the target device.

In an implementation, the second energy transmission module further includes a fourth power divider. The second array element is connected to the fourth power divider. The second array element is further configured to: receive, in a second state, a fourth detection signal from the target device, and input the fourth detection signal to the fourth power divider. The fourth power divider is configured to divide the fourth detection signal into a fifth detection signal and a sixth detection signal. Phase information of the sixth detection signal is used to perform time reversal processing on the third energy transmission signal input to the third power divider.

In an implementation, the second power divider is configured to divide the fourth detection signal into the fifth detection signal and the sixth detection signal that have equal energy.

In an implementation, the second energy transmission module further includes a fourth switch submodule. The second array element is connected to the fourth power divider by using the fourth switch submodule. The third power divider is connected to the second array element by using the fourth switch submodule. A third control module is configured to control the fourth switch submodule, so that the second array element inputs, in the second state, the fourth detection signal to the fourth power divider, and is configured to control the fourth switch submodule, so that the third power divider inputs, in the first state, the fifth energy transmission signal to the second array element.

In an implementation, the second energy transmission module further includes a fifth switch submodule. The third power divider is connected to the second energy transmission module by using the second switch submodule, and the fourth power divider is connected to the second energy transmission module by using the second switch submodule. The second control module is configured to control the fifth switch submodule, so that the fourth power divider inputs the fifth detection signal to a next-stage energy transmission module of the second energy transmission module, and is configured to control the fifth switch submodule, so that the fourth power divider inputs the third energy transmission signal to a next-stage energy transmission module of the second energy transmission module.

In an implementation, the second energy transmission module further includes a second phase detector. The second phase detector is separately connected to the fourth power divider and the first energy transmission module. The fourth power divider is configured to input the sixth detection signal to the second phase detector. The first energy transmission module is further configured to input the second detection signal to the second phase detector. The second phase detector is configured to extract a second phase difference between the sixth detection signal and the second detection signal. The second phase difference is used to perform time reversal processing on the second energy transmission signal input to the third power divider.

In an implementation, the second energy transmission module further includes the third control module and a second phase shifter. The first energy transmission module is connected to the third power divider by using the second phase shifter. The first energy transmission module is configured to input the second energy transmission signal to the second phase shifter. The third control module is connected to the second phase detector. The second phase detector is further configured to input the second phase difference to the third control module. The third control module is configured to: perform time reversal processing based on the second phase difference to obtain second phase shift information, and control the second phase shifter based on the second phase shift information to perform phase shift processing on the second energy transmission signal input to the third power divider. The second phase shifter is configured to input a second energy transmission signal on which phase shift processing is performed to the third power divider.

In the second transmission module, the second phase difference obtained by the second phase detector is the phase difference between the sixth detection signal and the second detection signal, a phase of the sixth detection signal is the same as a phase of the second detection signal received by the second transmission module, and a phase of the second detection signal is the same as a phase of the first detection signal received by the first energy transmission module. Therefore, the second phase difference may be considered as a difference between the phase of the second detection signal and the phase of the first detection signal. Performing phase shift processing on the second energy transmission signal from the first control module based on the second phase difference is equivalent to performing time reversal processing on the second energy transmission signal based on the phase difference between the second detection signal and the first detection signal.

The second energy transmission signal is obtained by performing phase shift processing on the first energy transmission signal from the first control module based on the first phase difference. Therefore, performing phase shift processing on the second energy transmission signal based on the second phase difference is equivalent to performing time reversal processing on the first energy transmission signal from the first control module based on the phase difference between the second detection signal and the reference signal.

Therefore, in this embodiment of this application, the second energy transmission module does not need to obtain the energy transmission signal from the first control module, to reduce a loss of the energy transmission signal, and can complete time reversal processing on the first energy transmission signal without obtaining the reference signal from the first control module, to reduce an amount of information that needs to be stored and processed by the first control module.

In an implementation, the second energy transmission module further includes a sixth switch submodule. The first energy transmission module is separately connected to the second phase shifter and the second phase detector by using the sixth switch submodule. The third control module is configured to control the sixth switch submodule, so that the first energy transmission module inputs, in a second state, the second detection signal to the second phase detector, and is configured to control the sixth switch submodule, so that the third control module inputs, in a first state, the second energy transmission signal to the second phase shifter.

In an implementation, the second energy transmission module further includes the third control module and a second phase shifter. The third power divider is connected to the second array element by using the second phase shifter. The third control module is separately connected to the first phase detector 6 and the first control module. The second phase detector is further configured to input the second phase difference to the third control module. The third control module is configured to send the second phase difference to the first control module. The first control module is configured to perform time reversal processing based on the second phase difference and the first phase difference that comes from the first energy transmission module, to obtain second phase shift information, and send the second phase shift information to the third control module. The third control module is further configured to control the second phase shifter based on the second phase shift information to perform phase shift processing on the fifth energy transmission signal output by the third power divider. The second phase shifter is configured to input a fifth energy transmission signal on which phase shift processing is performed to the second array element.

When a structure of the first energy transmission module is the same as that of the second energy transmission module, because the first power divider is connected to the first array element by using the first phase shifter, phase shift processing is performed only on the third energy transmission signal, and phase shift processing is not performed on the second energy transmission signal, that is, phase information of the second energy transmission signal is the same as that of the first energy transmission signal. The second phase difference is the phase difference between the sixth detection signal and the second detection signal, and is equivalent to a phase difference between the fourth detection signal and the first detection signal. Therefore, phase shift processing cannot be performed on the second energy transmission signal based on only the second phase difference, but needs to be performed on the second energy transmission signal based on the phase difference between the fourth detection signal and the reference signal sent by the first control module, to implement time reversal processing. Therefore, in this embodiment, the first phase difference and the second phase difference need to be added, and then time reversal processing is performed on the second energy transmission signal based on phase shift information obtained by adding the first phase difference and the second phase difference.

After receiving the first phase difference and the second phase difference, the first control module performs time reversal processing based on the second phase difference and the first phase difference that comes from the first energy transmission module, to obtain the second phase shift information, and sends the second phase shift information to the third control module. In other words, for a $k^{th}$-stage energy transmission module in a plurality of energy transmission modules, a sum of phase differences from a $1^{st}$-stage energy transmission module to the $k^{th}$-stage energy transmission module needs to be calculated according to a formula $\varphi_1 + \varphi_2 + \cdots + \varphi_k$, then phase shift information is calculated based on the sum of the phase differences, and the phase shift information is sent to the $k^{th}$-stage energy transmission module. This implements centralized processing of phase shift information of each energy transmission module by the first control module.

In an implementation, the second energy transmission module further includes a sixth switch submodule. The first energy transmission module is separately connected to the third power divider and the second phase detector by using the sixth switch submodule. The third control module is configured to control the sixth switch submodule, so that the first energy transmission module inputs, in a second state, the second detection signal to the second phase detector, and is configured to control the sixth switch submodule, so that the third control module inputs, in a first state, the second energy transmission signal to the third power divider.

In an implementation, the second energy transmission module further includes a second power amplifier. The first energy transmission module is connected to the third power divider by using the second power amplifier, and the second power amplifier is configured to amplify the second energy transmission signal output by the first energy transmission module.

In an implementation, an amplification factor of the second power amplifier is equal to a ratio of energy of the second energy transmission signal to energy of the fourth energy transmission signal.

It should be noted that the second energy transmission module is similar to the first energy transmission module. For understanding of the second energy transmission module, refer to the related description of the first energy transmission module.

A second aspect of embodiments of this application further provides a charger, including the apparatus according to any one of the implementations of the first aspect of embodiments of this application.

A third aspect of embodiments of this application further provides a terminal device, including the apparatus according to any one of the implementations of the first aspect of embodiments of this application. The terminal device may be applied to a scenario in which terminal devices are mutually charged.

A fourth aspect of embodiments of this application further provides a wireless power transfer method, applied to the foregoing wireless power transfer apparatus. The wireless power transfer apparatus includes a first control module, a first energy transmission module, and a second energy transmission module. The first control module is connected to the first energy transmission module, and the first energy transmission module is connected to the second energy transmission module. The method includes: The first control module inputs a first energy transmission signal to the first energy transmission module; and the first energy transmission module inputs a second energy transmission signal to the second energy transmission module, where the second energy transmission signal is obtained based on the first energy transmission signal, and both the first energy transmission signal and the second energy transmission signal are used to supply power to a target device.

In an implementation, the first energy transmission module includes a first power divider. The first control module is connected to the first power divider, and the first power divider is connected to the second energy transmission module. The method includes: The first control module inputs the first energy transmission signal to the first power divider; and the first power divider divides the first energy transmission signal into the second energy transmission signal and a third energy transmission signal, and inputs the second energy transmission signal to the second energy transmission module, where the third energy transmission signal is used to supply power to the target device.

It should be noted that, for a description of the method part, refer to the related description of the apparatus in the first aspect of embodiments of this application.

**BRIEF DESCRIPTION OF DRAWINGS**

FIG. 1 is a schematic diagram of an architecture of a power supply system according to an embodiment of this application;
FIG. 2 is a schematic diagram of an embodiment of a wireless power transfer apparatus according to an embodiment of this application;
FIG. 3 is a schematic diagram of an embodiment of a first energy transmission module according to an embodiment of this application;
FIG. 4 is a schematic diagram of another embodiment of a first energy transmission module according to an embodiment of this application;
FIG. 5 is a schematic diagram of an embodiment of a second energy transmission module according to an embodiment of this application; and
FIG. 6 is a schematic diagram of another embodiment of a wireless power transfer apparatus according to an embodiment of this application.

**DESCRIPTION OF EMBODIMENTS**

The following describes in detail the technical solutions in embodiments of this application with reference to the accompanying drawings in embodiments of this application.

For ease of understanding, the following first describes technical terms mentioned in embodiments of this application.

Energy transmission is transmission of energy to a current-consuming device, such as power supply of a supply line of a cable television and induction charging of an electric toothbrush.

An energy transmission signal is a signal that can transmit energy.

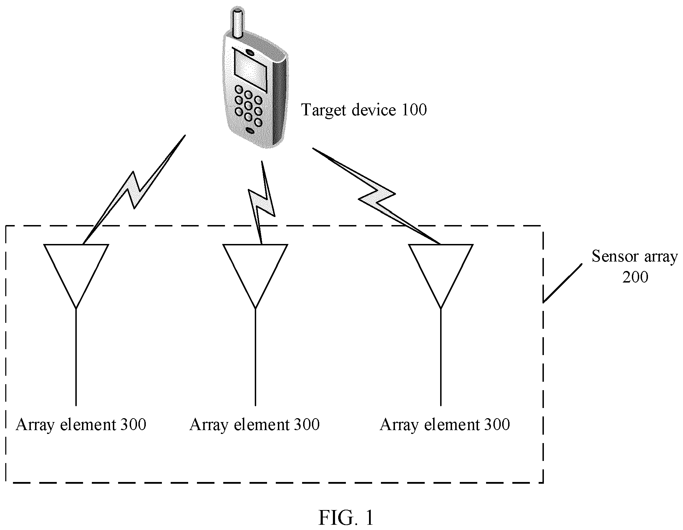

Embodiments of this application may be applied to a power supply system shown in FIG. 1. The power supply system includes a target device 100 and a sensor array 200 configured to supply power to the target device 100.

The target device 100 may be any device that can be wirelessly charged by using a time reversal wireless power transfer (Time Reversal Wireless Power Transfer, TR-WPT) technology. Specifically, the target device 100 may be a device such as a smartphone, a notebook computer, a wearable electronic device, or an embedded medical device. In FIG. 1, the smartphone is used as the target device 100.

The sensor array 200 is an array including a plurality of sensors arranged based on a specific requirement. In this embodiment of this application, the sensor is an array element 300, and the array element 300 may be understood as an antenna radiating element including an antenna. FIG. 1 shows three array elements 300.

The sensor array 200 may also be referred to as an antenna array. The antenna array includes two or more single antennas that work on a same frequency and perform feeding and spatial arrangement based on a specific requirement.

A process of supplying power by the sensor array 200 is as follows. The target device 100 sends a detection signal, the detection signal is separately received by each array element 300, and amplitudes and phase information of detection signals received by different array elements 300 may be different; and each array element 300 performs time reversal processing on an energy transmission signal based on the phase information of the detection signal received by each array element 300, and then transmits an energy transmission signal on which the time reversal processing is performed, and the transmitted energy transmission signal automatically forms an electromagnetic energy focusing spot at the target device 100, to supply power to the target device 100.

In FIG. 1, the target device 100 may also be referred to as an energy receiving end, and correspondingly, the sensor array 200 may be referred to as an energy supply end.

It should be noted that a current wireless power transfer apparatus further includes a control module, an energy transmission signal transmitted by each array element 300 comes from the control module, and the array element 300 is usually connected to the control module through a coaxial cable. However, a distance between the control module and the array element 300 is usually not short. If the control module is directly connected to each array element 300 through a coaxial cable, a total length of the coaxial cable between the control module and the array element 300 is long, and the total length of the coaxial cable between the control module and the array element 300 is proportional to a quantity of the array elements 300, that is, a loss of an energy transmission signal during transmission is proportional to the quantity of the array elements 300. This causes a large loss of the energy transmission signal, and reduces signal transmission efficiency of the sensor array 200.

Therefore, embodiments of this application provide a wireless power transfer apparatus. In the apparatus, energy transmission modules including array elements are connected in a cascading manner, a control module sends an energy transmission signal only to a 1$^{st}$-stage energy transmission module, and another energy transmission module other than the 1$^{st}$-stage energy transmission module obtains an energy transmission signal from a previous-stage energy transmission module. A distance between the energy transmission modules is usually short, and is at least less than a distance between the energy transmission modules and the control module. Therefore, even if the energy transmission modules in which the energy transmission modules are located are connected through a coaxial cable, a length of a coaxial cable required in the apparatus provided in this embodiment of this application is obviously less than a length of a coaxial cable in the target apparatus. This reduces a loss of an energy transmission signal during transmission, improves transmission efficiency of the energy transmission signal, and improves power transfer efficiency.

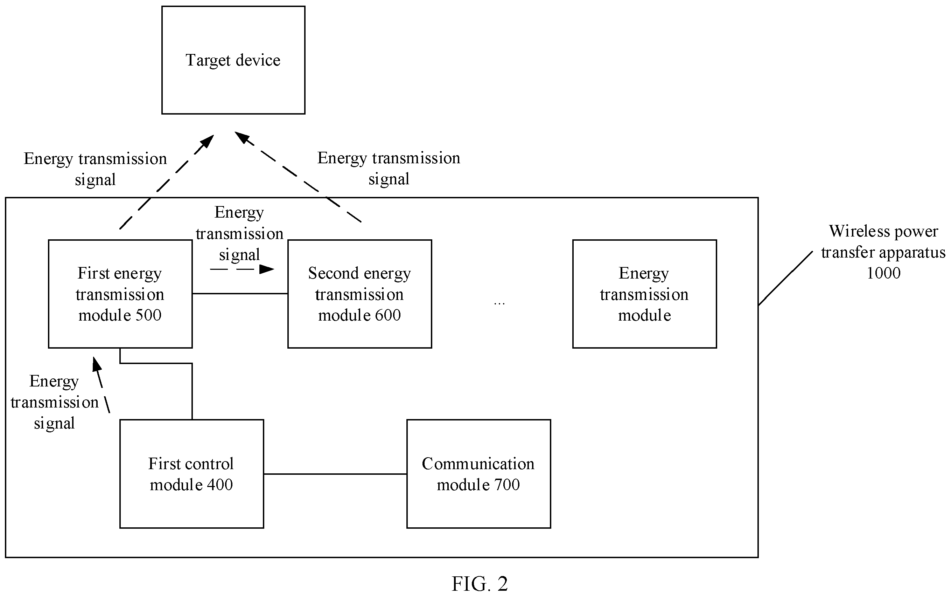

Specifically, as shown in FIG. 2, an embodiment of this application provides an embodiment of a wireless power transfer apparatus 1000. This embodiment includes a first control module 400 and a plurality of cascaded energy transmission modules.

Cascading can be understood as connecting more than two modules in a manner for capacity expansion.

A quantity of the energy transmission modules is not specifically limited in this embodiment of this application, and there may be two, three, or more energy transmission modules.

In this embodiment of this application, structures of the plurality of energy transmission modules may be the same. Specifically, it may be understood that types, quantities, and internal connection relationships of submodules inside the energy transmission modules are the same, and external connection relationships of the energy transmission modules are similar.

In this embodiment of this application, two of the plurality of cascaded energy transmission modules are used as an example for description. When there are three or more energy transmission modules, for understanding of another energy transmission module, refer to the related descriptions of the two energy transmission modules.

Specifically, as shown in FIG. 2, the plurality of energy transmission modules include a first energy transmission module 500 and a second energy transmission module 600.

The first control module is connected to the first energy transmission module, and the first energy transmission module is connected to the second energy transmission module.

When there are three or more energy transmission modules, and so on, a structure and a connection relationship of another energy transmission module other than the first energy transmission module 500 and the second energy transmission module 600 may be obtained by analogy.

It may be understood that the first energy transmission module 500 may be connected to the first control module 400 through a coaxial cable, and a connection manner between the first energy transmission module 500 and the first control module 400 is not limited to a coaxial cable connection manner. Similarly, the first energy transmission module 500 may also be connected to the second energy transmission module 600 through a coaxial cable, and a connection manner between the first energy transmission module 500 and the first energy transmission module 500 is not limited to a coaxial cable connection manner.

In addition, as shown in FIG. 2, the apparatus provided in this embodiment of this application may further include a communication module 700 connected to the first control module 400. The communication module 700 is configured to: receive an energy transmission request signal and an energy transmission termination signal that are sent by a target device, and send the energy transmission request signal and the energy transmission termination signal to the first control module 400.

The first control module 400 is further configured to: when the energy transmission request signal is received, control the energy transmission module to enter a receiving state or an energy transmission state. In the receiving state, the energy transmission module may receive a detection signal from the target device; and in the energy transmission state, the energy transmission module may transmit an energy transmission signal to supply power to the target device.

In the following, the energy transmission state is referred to as a first state, and the receiving state is referred to as a second state.

The first control module 400 is further configured to: when the energy transmission termination signal is received, control the energy transmission module to enter a sleep state. After entering the sleep state, the control module neither receives a signal nor transmits a signal.

With reference to FIG. 2, the following describes a working process of the apparatus provided in this embodiment of this application by using the first energy transmission module 500 and the second energy transmission module 600 as an example.

First, the communication module 700 receives the energy transmission request signal from the target device, the communication module 700 sends the energy transmission request signal to the first control module 400, and the first control module 400 controls the energy transmission module to enter the second state.

In the second state, the first energy transmission module 500 receives a first detection signal from the target device, and the second energy transmission module 600 receives a fourth detection signal from the target device.

It should be noted that the first energy transmission module 500 and the second energy transmission module 600 receive a same detection signal transmitted by the target device, but phase information and the like of the detection signal received by the first energy transmission module 500 may be slightly different from those of the detection signal received by the second energy transmission module 600. Therefore, in this embodiment of this application, the detection signal received by the first energy transmission module 500 is referred to as the first detection signal, and the detection signal received by the second energy transmission module 600 is referred to as the fourth detection signal.

Because the first detection signal is similar to the fourth detection signal, only the first detection signal is specifically described below, and for understanding of the fourth detection signal, refer to the related description of the first detection signal.

There may be a plurality of forms of the first detection signal. This is not specifically limited in this embodiment of this application. For example, the first detection signal may be represented as $S = \sin(t)$, where t indicates time.

Thereafter, the first control module 400 controls the first energy transmission module 500 to enter the first state.

In the first state, the first control module is configured to input a first energy transmission signal to the first energy transmission module, and the first energy transmission module is configured to input a second energy transmission signal to the second energy transmission module. The second energy transmission signal is obtained based on the first energy transmission signal, and both the first energy transmission signal and the second energy transmission signal are used to supply power to the target device.

In this embodiment of this application, only the first energy transmission module 500 in the plurality of cascaded energy transmission modules obtains the first energy transmission signal from the first control module 400, and other energy transmission modules obtain the energy transmission signal from a previous-stage energy transmission module. The second energy transmission module 600 is used as an example, the second energy transmission module 600 obtains the second energy transmission signal from the first energy transmission module 500 instead of obtaining the energy transmission signal from the first control module 400. Because a distance between the energy transmission modules is usually less than a distance between the energy transmission module and the control module, a length of a coaxial cable required by the second energy transmission module 600 to obtain the second energy transmission signal from the first energy transmission module 500 is less than a length of a coaxial cable required by the second energy transmission module 600 to obtain the energy transmission signal from the first control module 400. Therefore, this can reduce a loss of the energy transmission signal during transmission, improve signal transmission efficiency, and improve charging efficiency.

In addition, as the quantity of the energy transmission modules increases, effect of reducing the loss and improving the signal transmission efficiency in this embodiment of this application is more obvious.

In addition, because the energy transmission modules in this embodiment of this application are cascaded, it is convenient to increase the quantity of the energy transmission modules to achieve capacity expansion effect, and the entire apparatus does not need to be redesigned.

There are a plurality of structures for implementing a function of the energy transmission module. This is not specifically limited in this embodiment of this application.

The following first describes a structure of the first energy transmission module.

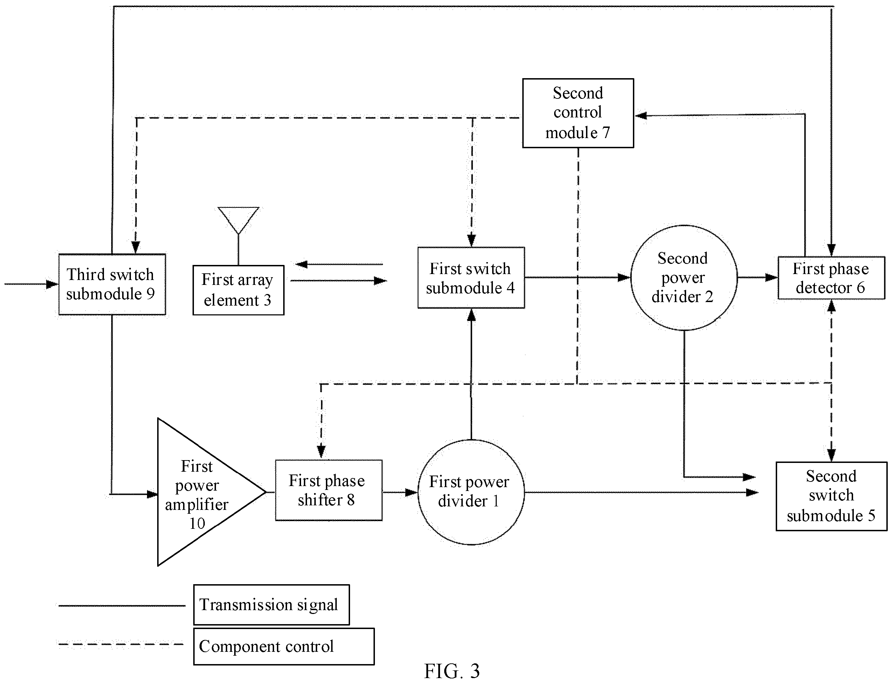

In an implementation, as shown in FIG. 3, the first energy transmission module includes a first power divider 1, the first control module is connected to the first power divider 1, and the first power divider 1 is connected to the second energy transmission module.

A power divider is a component that divides energy of one input signal into equal or unequal energy of two or more outputs.

The first control module is configured to input the first energy transmission signal to the first power divider 1.

The first power divider 1 is configured to: divide the first energy transmission signal into the second energy transmission signal and a third energy transmission signal, and input the second energy transmission signal to the second energy transmission module. The third energy transmission signal is used to supply power to the target device.

Both the second energy transmission signal and the third energy transmission signal are obtained based on the first energy transmission signal, and energy of the second energy transmission signal may be the same as or different from energy of the third energy transmission signal. When the energy of the second energy transmission signal is different from the energy of the third energy transmission signal, a ratio of the energy of the second energy transmission signal to the energy of the third energy transmission signal may be adjusted based on an actual requirement.

To ensure that the third energy transmission signal transmitted by the first energy transmission module has high energy (to achieve an objective of supplying power to the target device), the energy of the third energy transmission signal is usually greater than the energy of the second energy transmission signal. For example, a ratio of the energy of the third energy transmission signal to the energy of the second energy transmission signal may be 99: 1, 100:1, or higher.

Because the apparatus in this embodiment of this application supplies power by using a time reversal wireless power transfer technology, time reversal processing is performed on the third energy transmission signal, and time reversal processing may be performed on the second energy transmission signal, or time reversal processing is not performed on the second energy transmission signal. This is not specifically limited in this embodiment of this application.

The third energy transmission signal is used as an example, a process of performing time reversal processing on the third energy transmission signal may be understood as: extracting phase information of the first detection signal received by the first energy transmission module, and then performing time reversal processing on first energy transmission signal based on the phase information.

In an implementation, as shown in FIG. 3, the first energy transmission module further includes a first array element 3.

The first power divider 1 is connected to the first array element 3, and the first power divider 1 is configured to input the third energy transmission signal to the first array element 3.

The first array element 3 is configured to transmit, in the first state, the third energy transmission signal, to supply power to the target device.

In an implementation, as shown in FIG. 3, the first energy transmission module further includes a second power divider 2, and the first array element 3 is connected to the second power divider 2.

The first array element 3 is further configured to: receive the first detection signal from the target device in the second state, and input the first detection signal to the second power divider 2.

The second power divider 2 is configured to: divide the first detection signal into a second detection signal and a third detection signal, and input the second detection signal to the second energy transmission module. The third energy transmission signal is obtained by processing the first energy transmission signal based on phase information of the third detection signal.

The processing is time reversal processing. For understanding of a process of the time reversal processing, refer to the related description in the foregoing embodiment.

A relationship between the third detection signal and the second detection signal is similar to a relationship between the second energy transmission signal and the third energy transmission signal, the third detection signal and the second detection signal are obtained by splitting the first detection signal, and energy of the third detection signal may be the same as or different from energy of the second detection signal. When the energy of the third detection signal is different from the energy of the second detection signal, a ratio of the energy of the third detection signal to the energy of the second detection signal may be adjusted based on an actual requirement.

For example, the ratio of the energy of the third detection signal to the energy of the second detection signal may be 1:1, 2:1, or 1:2.

The second detection signal may be used as a reference signal, and is used to extract phase information of the fourth detection signal received by the second energy transmission module.

It may be understood that the phase information is usually a phase difference between the fourth detection signal and the second detection signal. When a structure of the second energy transmission module is the same as that of the first energy transmission module, the second energy transmission module also divides the fourth detection signal into two detection signals, and extracts the phase difference of the fourth detection signal by using the second detection signal and one of the two detection signals.

To prevent different other parameters from affecting accuracy of the extracted phase difference, an appropriate power divider may be selected, so that energy of the second detection signal is equal to energy of one of the two detection signals.

Therefore, in an implementation, as shown in FIG. 3, the second power divider 2 is configured to divide the first detection signal into the second detection signal and the third detection signal that have equal energy.

In this way, the energy of the second detection signal is half of energy of the first detection signal. When the structure of the second energy transmission module is the same as that of the first energy transmission module, the energy of one of the two detection signals is also half of energy of the fourth detection signal, so that the energy of the second detection signal is equal to the energy of one of the two detection signals, to prevent the different other parameters from affecting the accuracy of the extracted phase difference.

It can be learned from the foregoing description that the first array element 3 is not only configured to receive the first detection signal, but also configured to transmit the third energy transmission signal. Therefore, a switch module needs to control a state of the first array element 3.

Specifically, in an implementation, as shown in FIG. 3, the first energy transmission module further includes a first switch submodule 4.

The first array element 3 is connected to the second power divider 2 by using the first switch submodule 4, and the first power divider 1 is connected to the first array element 3 by using the first switch submodule 4.

A second control module 7 is configured to control the first switch submodule 4, so that the first array element 3 inputs, in the second state, the first detection signal to the second power divider 2, and is configured to control the first switch submodule 4, so that the first power divider 1 inputs, in the first state, the third energy transmission signal to the first array element 3.

In this embodiment, the two states of the first array element 3 can be controlled by the second switch submodule 5, so that the apparatus provided in this embodiment of this application has a simple structure, a small size, and light weight. In addition, the first switch submodule 4 is controlled by the second control module 7 instead of the first control module. This can reduce load of the first control module, reduce an amount of information that needs to be stored and processed by the first control module, and implement quick control on the first array element 3.

Similarly, the first energy transmission module separately inputs the second detection signal and the second energy transmission signal to the second energy transmission module in different states. To control the process, in an implementation, as shown in FIG. 3, the first energy transmission module further includes a second switch submodule 5.

The second power divider 2 is connected to the second energy transmission module by using the second switch submodule 5, and the first power divider 1 is connected to the second energy transmission module by using the second switch submodule 5.

The second control module 7 is configured to control the second switch submodule 5, so that the second power divider 2 inputs the second detection signal to the second energy transmission module, and is configured to control the second switch submodule 5, so that the first power divider 1 inputs the second energy transmission signal to the second energy transmission module.

In this embodiment, the second power divider 2 and the first power divider 1 can be controlled by the second switch submodule 5, so that the apparatus provided in this embodiment of this application has a simple structure, a small size, and light weight. In addition, the third switch submodule 9 is controlled by the second control module 7 instead of the first control module. Therefore, this can reduce load of the first control module, reduce an amount of information that needs to be stored and processed by the first control module, and implement quick control on the second power divider 2 and the first power divider 1.

A phase detector (phase detector) is a component that can identify a phase difference between input signals, and is a circuit that enables an output voltage to have a definite relationship with a phase difference between two input signals. Therefore, a phase detector may be configured to extract phase information of a detection signal.

In an implementation, as shown in FIG. 3, the first energy transmission module further includes a first phase detector 6, and the first phase detector 6 is separately connected to the second power divider 2 and the first control module.

The second power divider 2 is configured to input the third detection signal to the first phase detector 6, and the first control module is further configured to input a reference signal to the first phase detector 6.

The first phase detector 6 is configured to extract a first phase difference between the third detection signal and the reference signal. The first phase difference is used to perform time reversal processing on the first energy transmission signal input to the first power divider 1.

A phase shifter (Phaser) is an apparatus that can adjust a phase of a wave. It may be understood that a signal is essentially a wave. Therefore, a phase shifter may be configured to perform time reversal processing on an energy transmission signal.

In an implementation, as shown in FIG. 3, the first energy transmission module further includes the second control module 7 and a first phase shifter 8, the first control module is connected to the first power divider 1 by using the first phase shifter 8, and the first control module is configured to input the first energy transmission signal to the first phase shifter 8.

The second control module 7 is connected to the first phase detector 6, and the first phase detector 6 is further configured to input the first phase difference to the second control module 7.

The second control module 7 is configured to: perform time reversal processing based on the first phase difference to obtain first phase shift information, and control the first phase shifter 8 based on the first phase shift information to perform phase shift processing on the first energy transmission signal input to the first power divider 1.

The first phase shifter 8 is configured to input, to the first power divider 1, a first energy transmission signal on which phase shift processing is performed.

In this embodiment, because the first phase shifter 8 is configured to input, to the first power divider 1, the first energy transmission signal on which phase shift processing is performed, not only the third energy transmission signal is obtained through phase shift processing, but also the second energy transmission signal received by the second energy transmission module is obtained through phase shift processing. In this way, when the structure of the second energy transmission module is the same as that of the first energy transmission module, the second energy transmission module only needs to perform phase shift processing on the second energy transmission signal based on the phase difference between the fourth detection signal and the second detection signal, to complete time reversal processing.

In addition, the time reversal processing is totally performed by the second control module 7 inside the first energy transmission module instead of the first control module. Therefore, this can reduce load of the first control module, and reduce an amount of information that needs to be stored and processed by the first control module.

It can be learned from the foregoing description that, in different states, the first control module separately inputs the reference signal and the first energy transmission signal to the first energy transmission module. To control the process, in an implementation, as shown in FIG. 3, the first energy transmission module further includes a third switch submodule 9.

The first control module is separately connected to the first phase shifter 8 and the first phase detector 6 by using the third switch submodule 9.

The second control module 7 is configured to control the third switch submodule 9, so that the first control module inputs, in a second state, the reference signal to the first phase detector 6, and is configured to control the third switch submodule 9, so that the first control module inputs, in a first state, the first energy transmission signal to the first phase shifter 8.

In this embodiment, the first phase detector 6 and the first phase shifter 8 can be controlled by the third switch submodule 9, so that the apparatus provided in this embodiment of this application has a simple structure, a small size, and light weight. In addition, the third switch submodule 9 is controlled by the second control module 7 instead of the first control module. Therefore, this can reduce load of the first control module, reduce an amount of information that needs to be stored and processed by the first control module, and implement quick control on the first phase detector 6 and the first phase shifter 8.

In the foregoing embodiment, the first energy transmission signal first passes through the first phase shifter 8, and then passes through the first power divider 1. Correspondingly, a process of time reversal processing is independently completed by the second control module 7. The following provides another embodiment. In this embodiment, the first energy transmission signal first passes through the first power divider 1, and then passes through the first phase shifter 8, and the process of time reversal processing is jointly completed by the second control module 7 and the first control module.

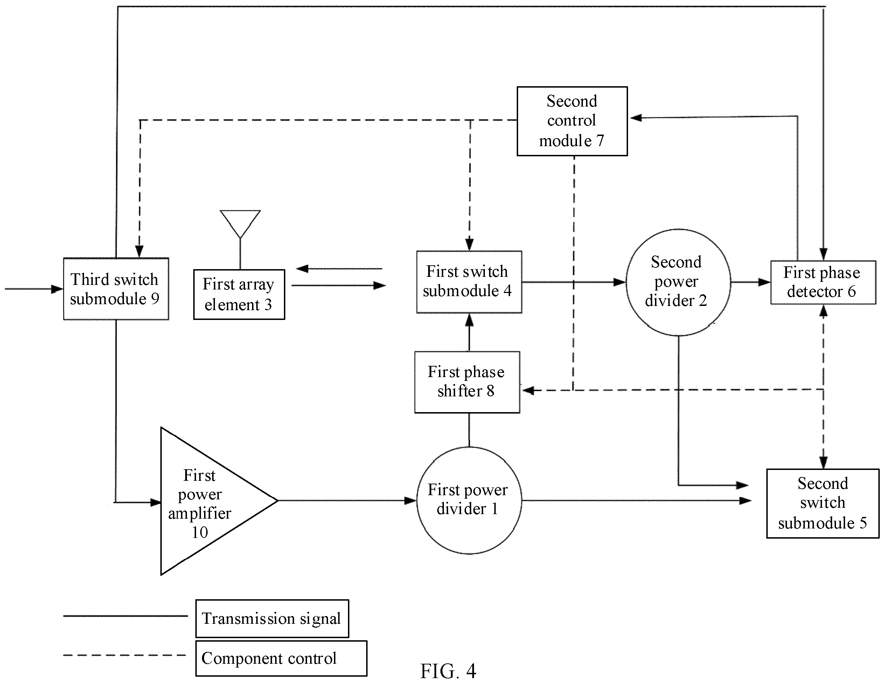

In an implementation, as shown in FIG. 4, the first energy transmission module further includes the second control module 7 and a first phase shifter 8.

The first power divider 1 is connected to the first array element 3 by using the first phase shifter 8, and the second control module 7 is separately connected to the first phase detector 6 and the first control module.

The first phase detector 6 is further configured to input the first phase difference to the second control module 7. The second control module 7 is configured to send the first phase difference to the first control module.

The first control module is configured to: perform time reversal processing based on the first phase difference to obtain first phase shift information, and send the first phase shift information to the second control module 7.

The second control module 7 is further configured to control the first phase shifter 8 based on the first phase shift information to perform phase shift processing on the third energy transmission signal output by the first power divider 1.

The first phase shifter 8 is configured to input a third energy transmission signal on which phase shift processing is performed to the first array element 3.

In this embodiment, because the first power divider 1 is connected to the first array element 3 by using the first phase shifter 8, only the third energy transmission signal has undergone phase shift processing, and the second energy transmission signal has not undergone phase shift processing, that is, the second energy transmission signal and the first energy transmission signal have same phase information. In this way, when the structure of the second energy transmission module is the same as that of the first energy transmission module, the second energy transmission module cannot perform phase shift processing on the second energy transmission signal based on only the phase difference between the fourth detection signal and the second detection signal, but needs to perform phase shift processing on the second energy transmission signal based on a phase difference between the fourth detection signal and the reference signal sent by the first control module, to complete time reversal processing.

In an implementation, as shown in FIG. 4, the first energy transmission module further includes a third switch submodule 9.

The first control module is separately connected to the first power divider 1 and the first phase detector 6 by using the third switch submodule 9.

The second control module 7 is configured to control the third switch submodule 9, so that the first control module inputs, in a second state, the reference signal to the first phase detector 6, and is configured to control the third switch submodule 9, so that the first control module inputs, in a first state, the first energy transmission signal to the first power divider 1.

In this embodiment, the first phase detector 6 and the first power divider 1 can be controlled by the third switch submodule 9, so that the apparatus provided in this embodiment of this application has a simple structure, a small size, and light weight. In addition, the third switch submodule 9 is controlled by the second control module 7 instead of the first control module. Therefore, this can reduce load of the first control module, reduce an amount of information that needs to be stored and processed by the first control module, and implement quick control on the first phase detector 6 and the first power divider 1.

Based on the foregoing description, it can be learned that the energy of the third energy transmission signal transmitted by the first array element 3 is usually greater than the energy of the second energy transmission signal. Therefore, the energy of the second energy transmission signal received by a second array element 13 is less than energy of the first energy transmission signal received by the first energy transmission module. In addition, in the plurality of cascaded energy transmission modules, energy of an energy transmission signal received by a later energy transmission module is smaller.

Therefore, to ensure that energy of an energy transmission signal received by each energy transmission module is not excessively low, in this embodiment of this application, a power amplifier is added to each energy transmission module, to amplify an input energy transmission signal.

Specifically, in an implementation, as shown in FIG. 3, the first energy transmission module further includes a first power amplifier 10.

The first control module is connected to the first power divider 1 by using the first power amplifier 10, and the first power amplifier 10 is configured to amplify the first energy transmission signal output by the first control module.

Specifically, the first control module may be connected to the first power divider 1 sequentially by using the first power amplifier 10 and the first phase shifter 8. The first power amplifier 10 is configured to amplify the first energy transmission signal output by the first control module.

It should be noted that an amplification proportion of the first power amplifier 10 may be adjusted based on an actual requirement. This is not specifically limited in this embodiment of this application.

To ensure that the energy of the second energy transmission signal received by the second energy transmission module is approximately the same as the energy of the first energy transmission signal received by the first energy transmission module, an amplification factor of the first power amplifier 10 is equal to a ratio of the energy of the first energy transmission signal to the energy of the second energy transmission signal.

For example, if the ratio of the energy of the first energy transmission signal to the energy of the second energy transmission signal is 100:1, the amplification proportion of the first power amplifier 10 is 100:1, that is, the first power amplifier 10 amplifies the energy of the received first energy transmission signal by 100 times. If the ratio of the energy of the first energy transmission signal to the energy of the second energy transmission signal is 110:1, the amplification proportion of the first power amplifier 10 is 110:1, that is, the first power amplifier 10 amplifies the energy of the received first energy transmission signal by 110 times.

The foregoing describes the structure of the first energy transmission module, and the following describes the structure of the second energy transmission module. The structure and an internal connection relationship of the second energy transmission module are the same as those of the first energy transmission module. A difference lies in that the first energy transmission module is connected to the first control module, and the second energy transmission module is connected to the first energy transmission module.

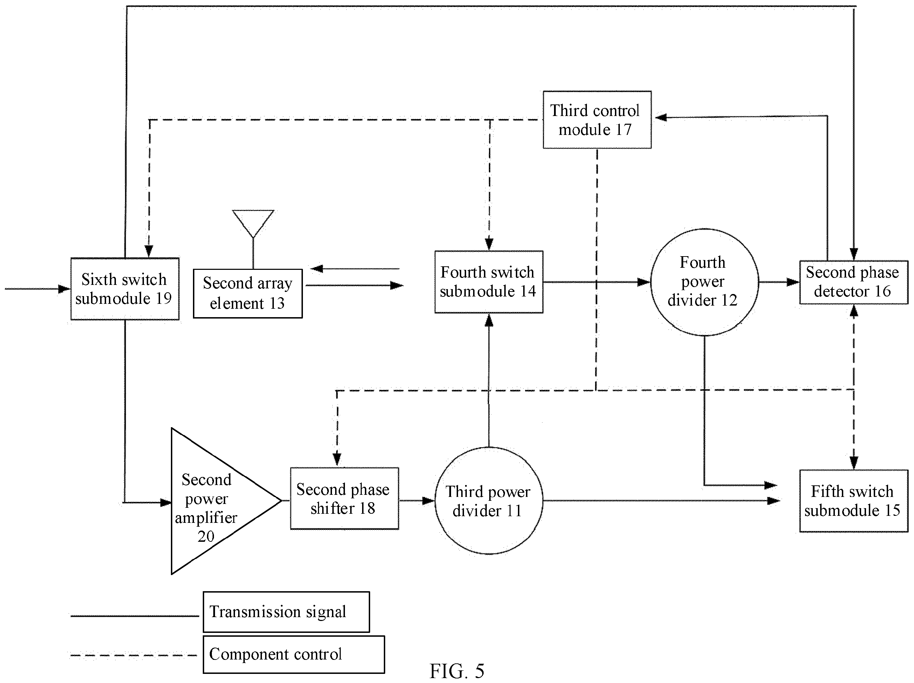

Specifically, in an implementation, as shown in FIG. 5, the second energy transmission module includes a third power divider 11.

The first energy transmission module is connected to the third power divider 11.

The first energy transmission module inputs the second energy transmission signal to the third power divider 11.

The third power divider 11 is configured to divide the second energy transmission signal into a fourth energy transmission signal and a fifth energy transmission signal. The fifth energy transmission signal is used to supply power to the target device.

When the wireless power transfer apparatus further includes another energy transmission module, the third power divider 11 may input the fourth energy transmission signal to a next-stage energy transmission module.

In an implementation, as shown in FIG. 5, the second energy transmission module further includes a second array element 13.

The second array element 13 is connected to the third power divider 11.

The third power divider 11 is configured to input the fifth energy transmission signal to the first array element 3.

The first array element 3 is configured to transmit, in a first state, the fifth energy transmission signal, to supply power to the target device.

In an implementation, as shown in FIG. 5, the second energy transmission module further includes a fourth power divider 12.

The second array element 13 is connected to the fourth power divider 12.

The second array element 13 is further configured to: receive, in a second state, the fourth detection signal from the target device, and input the fourth detection signal to the fourth power divider 12.

The fourth power divider 12 is configured to divide the fourth detection signal into a fifth detection signal and a sixth detection signal. Phase information of the sixth detection signal is used to perform time reversal processing on the third energy transmission signal input to the third power divider 11.

In an implementation, as shown in FIG. 5, the second power divider 2 is configured to divide the fourth detection signal into a fifth detection signal and a sixth detection signal that have equal energy.

In an implementation, as shown in FIG. 5, the second energy transmission module further includes a fourth switch submodule 14.

The second array element 13 is connected to the fourth power divider 12 by using the fourth switch submodule 14.

The third power divider 11 is connected to the second array element 13 by using the fourth switch submodule 14.

A third control module 17 is configured to control the fourth switch submodule 14, so that the second array element 13 inputs, in the second state, the fourth detection signal to the fourth power divider 12, and is configured to control the fourth switch submodule 14, so that the third power divider 11 inputs, in the first state, the fifth energy transmission signal to the second array element 13.

In an implementation, as shown in FIG. 5, the second energy transmission module further includes a fifth switch submodule 15.

The third power divider 11 is connected to the second energy transmission module by using the second switch submodule 5, and the fourth power divider 12 is connected to the second energy transmission module by using the second switch submodule 5.

The second control module 7 is configured to control the fifth switch submodule 15, so that the fourth power divider 12 inputs the fifth detection signal to a next-stage energy transmission module of the second energy transmission module, and is configured to control the fifth switch submodule 15, so that the fourth power divider 12 inputs the third energy transmission signal to a next-stage energy transmission module of the second energy transmission module.

In an implementation, as shown in FIG. 5, the second energy transmission module further includes a second phase detector 16.

The second phase detector 16 is separately connected to the fourth power divider 12 and the first energy transmission module.

The fourth power divider 12 is configured to input the sixth detection signal to the second phase detector 16.

The first energy transmission module is further configured to input the second detection signal to the second phase detector 16.

The second phase detector 16 is configured to extract a second phase difference between the sixth detection signal and the second detection signal. The second phase difference is used to perform time reversal processing on the second energy transmission signal input to the third power divider 11.

It should be noted that, in the first energy transmission module, the first phase difference is the phase difference between the third detection signal and the reference signal, and in the second energy transmission module, the second phase difference is a phase difference between the sixth detection signal and the second detection signal.

In an implementation, as shown in FIG. 5, the second energy transmission module further includes the third control module 17 and a second phase shifter 18.

The first energy transmission module is connected to the third power divider 11 by using the second phase shifter 18.

The first energy transmission module is configured to input the second energy transmission signal to the second phase shifter 18.

The third control module 17 is connected to the second phase detector 16.

The second phase detector 16 is further configured to input the second phase difference to the third control module 17.

The third control module 17 is configured to: perform time reversal processing based on the second phase difference to obtain second phase shift information, and control the second phase shifter 18 based on the second phase shift information to perform phase shift processing on the second energy transmission signal input to the third power divider 11.

The second phase shifter 18 is configured to input a second energy transmission signal on which phase shift processing is performed to the third power divider 11.

In the second transmission module, the second phase difference obtained by the second phase detector 16 is the phase difference between the sixth detection signal and the second detection signal, a phase of the sixth detection signal is the same as a phase of the second detection signal received by the second transmission module, and a phase of the second detection signal is the same as a phase of the first detection signal received by the first energy transmission module. Therefore, the second phase difference may be considered as a difference between the phase of the second detection signal and the phase of the first detection signal. Performing phase shift processing on the second energy transmission signal from the first control module based on the second phase difference is equivalent to performing time reversal processing on the second energy transmission signal based on the phase difference between the second detection signal and the first detection signal.

The second energy transmission signal is obtained by performing phase shift processing on the first energy transmission signal from the first control module based on the first phase difference. Therefore, performing phase shift processing on the second energy transmission signal based on the second phase difference is equivalent to performing time reversal processing on the first energy transmission signal from the first control module based on the phase difference between the second detection signal and the reference signal.

Therefore, in this embodiment of this application, the second energy transmission module can complete time reversal processing on the first energy transmission signal without obtaining the energy transmission signal from the first control module or obtaining the reference signal from the first control module.

In an implementation, as shown in FIG. 5, the second energy transmission module further includes a sixth switch submodule 19.

The first energy transmission module is separately connected to the second phase shifter 18 and the second phase detector 16 by using the sixth switch submodule 19.

The third control module 17 is configured to control the sixth switch submodule 19, so that the first energy transmission module inputs, in a second state, the second detection signal to the second phase detector 16, and is configured to control the sixth switch submodule 19, so that the third control module 17 inputs, in a first state, the second energy transmission signal to the second phase shifter 18.

In an implementation, the second energy transmission module further includes the third control module 17 and a second phase shifter 18.

The third power divider 11 is connected to the second array element 13 by using the second phase shifter 18.

The third control module 17 is separately connected to the first phase detector 6 and the first control module.

The second phase detector 16 is further configured to input the second phase difference to the third control module 17.

The third control module 17 is configured to send the second phase difference to the first control module.

The first control module is configured to: perform time reversal processing based on the second phase difference and the first phase difference that comes from the first energy transmission module, to obtain second phase shift information, and send the second phase shift information to the third control module 17.

The third control module 17 is further configured to control the second phase shifter 18 based on the second phase shift information to perform phase shift processing on the fifth energy transmission signal output by the third power divider 11.

The second phase shifter 18 is configured to input a fifth energy transmission signal on which phase shift processing is performed to the second array element 13.

Based on the foregoing related description, it can be learned that when the structure of the first energy transmission module is the same as that of the second energy transmission module, because the first power divider 1 is connected to the first array element 3 by using the first phase shifter 8, phase shift processing is performed only on the third energy transmission signal, and phase shift processing is not performed on the second energy transmission signal, that is, phase information of the second energy transmission signal is the same as that of the first energy transmission signal. The second phase difference is the phase difference between the sixth detection signal and the second detection signal, and is equivalent to a phase difference between the fourth detection signal and the first detection signal. Therefore, phase shift processing cannot be performed on the second energy transmission signal based on only the second phase difference, but needs to be performed on the second energy transmission signal based on the phase difference between the fourth detection signal and the reference signal sent by the first control module, to implement time reversal processing.

Therefore, in this embodiment, the first phase difference and the second phase difference need to be added, and then time reversal processing is performed on the second energy transmission signal based on phase shift information obtained by adding the first phase difference and the second phase difference.

After receiving the first phase difference and the second phase difference, the first control module performs time reversal processing based on the second phase difference and the first phase difference that comes from the first energy transmission module, to obtain the second phase shift information, and sends the second phase shift information to the third control module 17.

In other words, for a $k^{th}$-stage energy transmission module in the plurality of energy transmission modules, a sum of phase differences from a $1^{st}$-stage energy transmission module to the $k^{th}$-stage energy transmission module needs to be calculated according to a formula $\varphi_1 + \varphi_2 + \cdots + \varphi_k$, then phase shift information is calculated based on the sum of the phase differences, and the phase shift information is sent to the $k^{th}$-stage energy transmission module.

The following further describes the foregoing process with reference to FIG. 2 by using the first energy transmission module and the second energy transmission module as an example.

Specifically, the first control module receives a phase difference X from the first energy transmission module and a phase difference Y from the second energy transmission module. For the first energy transmission module, because there is no other energy transmission module between the first energy transmission module and the first control module, the first control module calculates phase shift information M based on the phase difference X, and sends the phase shift information M to the first energy transmission module. For the second energy transmission module, because the first energy transmission module exists between the second energy transmission module and the first control module, the first control module calculates phase shift information N based on an accumulated sum of the phase difference X and the phase difference Y, and sends the phase shift information N to the second energy transmission module.

By analogy, phase information of another energy transmission module may be obtained.

Then, the first energy transmission module processes the first energy transmission signal from the first control module based on the phase shift information M; and the second energy transmission module processes the third energy transmission signal from the first energy transmission module based on the phase shift information N.

Except for the foregoing difference, the second embodiment is the same as the first embodiment. For understanding of the second embodiment, refer to the related description in the first embodiment.

In an implementation, the second energy transmission module further includes a sixth switch submodule 19.

The first energy transmission module is separately connected to the third power divider 11 and the second phase detector 16 by using the sixth switch submodule 19.

The third control module 17 is configured to control the sixth switch submodule 19, so that the first energy transmission module inputs, in the second state, the second detection signal to the second phase detector 16, and is configured to control the sixth switch submodule 19, so that the third control module 17 inputs, in the first state, the second energy transmission signal to the third power divider 11.

In an implementation, the second energy transmission module further includes a second power amplifier 20.

The first energy transmission module is connected to the third power divider 11 by using the second power amplifier 20, and the second power amplifier 20 is configured to amplify the second energy transmission signal output by the first energy transmission module.

In an implementation, an amplification factor of the second power amplifier 20 is equal to a ratio of energy of the second energy transmission signal to energy of the fourth energy transmission signal.

In addition to the foregoing difference, the second energy transmission module is the same as the first energy transmission module. For understanding of the second energy transmission module, refer to the related description of the first energy transmission module.

For ease of understanding, the following further describes, by using an application embodiment, the wireless power transfer apparatus provided in this embodiment of this application.

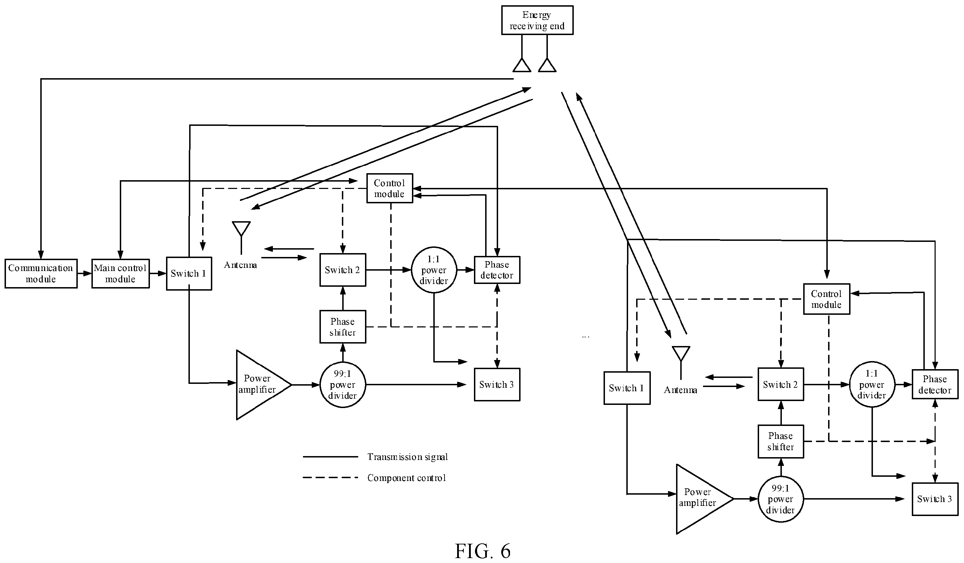

Specifically, as shown in FIG. 6, the application embodiment includes the following steps.

Step 1: A communication module receives an energy transmission request signal transmitted by an energy receiving end, and inputs the energy transmission request signal to a main control module (namely, the first control module described above), and the main control module sends receiving state control information to enable each energy transmission module to be in a receiving state.

In the receiving state, in a 1st-stage energy transmission module, a control module controls a switch 2 (which is equivalent to the foregoing first switch) to send, to a 1:1 power divider (which is equivalent to the foregoing second power divider), a detection signal S received by a corresponding array element (which is represented by an antenna in FIG. 6), controls a switch 3 to output, to a 2nd-stage energy transmission module, a detection signal B (which is equivalent to the foregoing second detection signal) divided by the 1:1 power divider, and controls a switch 1 sends a detection signal B (which is equivalent to the foregoing reference signal) from the first control module to a phase detector.

For example, the detection signal S = sin(t) received by the array element is divided into two equal signals after passing through the 1:1 power divider. A second detection signal $A = \frac{1}{2}\sin(t)$ is output to the phase detector, mutual phase discrimination is performed between the second detection signal and the detection signal B, and a phase difference $\varphi_k$ is sent to the control module. A first detection signal $B = \frac{1}{2}\sin(t)$ is output to the switch 3, and the switch 3 is connected to the 2nd-stage energy transmission module.

A working principle of the 2nd-stage energy transmission module is similar to a working principle of the 1st-stage energy transmission module. Details are not described herein again.

Step 2: The control module in the energy transmission module sends the phase difference $\varphi_k$ output by the phase detector to the main control module according to the I2C protocol, and the main control module accumulates phase differences $\varphi_1 + \varphi_2 + \cdots + \varphi_k$ between a phase of the energy transmission module at this level and a phase of the energy transmission module at each previous level, performs a time reversal operation on an accumulation result to obtain phase shift information, and then sends the phase shift information to a control module in a corresponding energy transmission module to control a phase shifter.

Step 3: The main control module sends energy transmission state control information to the control module to enable each energy transmission module to be in an energy transmission state, and sends a radio frequency initial signal (namely, the first energy transmission signal) to the 1st-stage energy transmission module. In this case, the control module in the 1st-stage energy transmission module controls the switch 1 (which is equivalent to the foregoing second switch) to send the radio frequency initial signal to a power amplifier for amplification to obtain an energy transmission signal. The energy transmission signal is divided into two signals by a 99:1 power divider (which is equivalent to the foregoing first power divider), a second signal occupying 99% energy is an energy transmission signal C (which is equivalent to the foregoing third energy transmission signal), and a first signal occupying 1% energy is an energy transmission signal D (which is equivalent to the foregoing second energy transmission signal). The energy transmission signal C is input to the phase shifter. The control module controls the phase shifter to perform phase shift processing on the energy transmission signal C based on the phase shift information to obtain a time reversal signal. Then, the control module radiates the time reversal signal to the energy receiving end by controlling the switch 2 (which is equivalent to the foregoing first switch). In addition, the energy transmission signal D is further sent to the 2nd-stage energy transmission module by controlling the switch 3. A working principle of the 2nd-stage energy transmission module is similar to a working principle of the 1st-stage energy transmission module. Details are not described herein again.

Step 4: After energy charging ends, the energy receiving end sends an energy transmission termination signal. The communication module receives the energy transmission termination signal transmitted by the energy receiving end, and sends the energy transmission termination signal to the main control module. The main control module enables, based on the received energy transmission termination signal, each energy transmission module to be in a sleep state and stop energy transmission.

An embodiment of this application further provides a charger, including the wireless power transfer apparatus shown in FIG. 2 to FIG. 5.

An embodiment of this application further provides a terminal device, including the wireless power transfer apparatus shown in FIG. 2 to FIG. 5. The terminal device may be applied to a scenario in which terminal devices are mutually charged.

An embodiment of this application further provides a wireless power transfer method, applied to the foregoing wireless power transfer apparatus. The wireless power transfer apparatus includes a first control module, a first energy transmission module, and a second energy transmission module.

The first control module is connected to the first energy transmission module, and the first energy transmission module is connected to the second energy transmission module.

The method includes:

the first control module inputs a first energy transmission signal to the first energy transmission module; and
the first energy transmission module inputs a second energy transmission signal to the second energy transmission module, where the second energy transmission signal is obtained based on the first energy transmission signal, and both the first energy transmission signal and the second energy transmission signal are used to supply power to a target device.

In an implementation, the first energy transmission module includes a first power divider.

The first control module is connected to the first power divider, and the first power divider is connected to the second energy transmission module.

The method includes:

the first control module inputs the first energy transmission signal to the first power divider; and
the first power divider divides the first energy transmission signal into the second energy transmission signal and a third energy transmission signal, and inputs the second energy transmission signal to the second energy transmission module, where the third energy transmission signal is used to supply power to the target device.

It should be noted that, for understanding of the foregoing method, refer to the description of the foregoing apparatus part.

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

**Claims**

1. A wireless power transfer apparatus, comprising a first control module, a first energy transmission module, and a second energy transmission module, wherein

the first control module is connected to the first energy transmission module, and the first energy transmission module is connected to the second energy transmission module;
the first control module is configured to input a first energy transmission signal to the first energy transmission module; and
the first energy transmission module is configured to input a second energy transmission signal to the second energy transmission module, wherein the second energy transmission signal is obtained based on the first energy transmission signal, and both the first energy transmission signal and the second energy transmission signal are used to supply power to a target device.

2. The apparatus according to claim 1, wherein the first energy transmission module comprises a first power divider;

the first control module is connected to the first power divider, and the first power divider is connected to the second energy transmission module;

the first control module is configured to input the first energy transmission signal to the first power divider; and

the first power divider is configured to: divide the first energy transmission signal into the second energy transmission signal and a third energy transmission signal, and input the second energy transmission signal to the second energy transmission module, wherein the third energy transmission signal is used to supply power to the target device.

3. The apparatus according to claim 2, wherein the first energy transmission module further comprises a first array element;

the first power divider is connected to the first array element;

the first power divider is configured to input the third energy transmission signal to the first array element; and

the first array element is configured to transmit, in a first state, the third energy transmission signal, to supply power to the target device.

4. The apparatus according to claim 3, wherein the first energy transmission module further comprises a second power divider;

the first array element is connected to the second power divider;

the first array element is further configured to: receive, in a second state, a first detection signal from the target device, and input the first detection signal to the second power divider; and

the second power divider is configured to: divide the first detection signal into a second detection signal and a third detection signal, and input the second detection signal to the second energy transmission module, wherein the third energy transmission signal is obtained by processing the first energy transmission signal based on phase information of the third detection signal.

5. The apparatus according to claim 4, wherein the second power divider is configured to divide the first detection signal into the second detection signal and the third detection signal that have equal energy.

6. The apparatus according to claim 4 or 5, wherein the first energy transmission module further comprises a first switch submodule;

the first array element is connected to the second power divider by using the first switch submodule;

the first power divider is connected to the first array element by using the first switch submodule; and

a second control module is configured to control the first switch submodule, so that the first array element inputs, in the second state, the first detection signal to the second power divider, and is configured to control the first switch submodule, so that the first power divider inputs, in the first state, the third energy transmission signal to the first array element.

7. The apparatus according to any one of claims 4 to 6, wherein the first energy transmission module further comprises a second switch submodule;

the second power divider is connected to the second energy transmission module by using the second switch submodule;

the first power divider is connected to the second energy transmission module by using the second switch submodule; and

the second control module is configured to control the second switch submodule, so that the second power divider inputs the second detection signal to the second energy transmission module, and is configured to control the second switch submodule, so that the first power divider inputs the second energy transmission signal to the second energy transmission module.

8. The apparatus according to any one of claims 4 to 7, wherein the first energy transmission module further comprises a first phase detector;

the first phase detector is separately connected to the second power divider and the first control module;

the second power divider is configured to input the third detection signal to the first phase detector;

the first control module is further configured to input a reference signal to the first phase detector; and

the first phase detector is configured to extract a first phase difference between the third detection signal and the reference signal, wherein the first phase difference is used to perform time reversal processing on the first energy transmission signal input to the first power divider.

9. The apparatus according to claim 8, wherein the first energy transmission module further comprises the second control module and a first phase shifter;

the first control module is connected to the first power divider by using the first phase shifter; the first control module is configured to input the first energy transmission signal to the first phase shifter; the second control module is connected to the first phase detector; the first phase detector is further configured to input the first phase difference to the second control module; the second control module is configured to: perform time reversal processing based on the first phase difference to obtain first phase shift information, and control the first phase shifter based on the first phase shift information to perform phase shift processing on the first energy transmission signal input to the first power divider; and the first phase shifter is configured to input a first energy transmission signal on which phase shift processing is performed to the first power divider.

10. The apparatus according to claim 9, wherein the first energy transmission module further comprises a third switch submodule;

the first control module is separately connected to the first phase shifter and the first phase detector by using the third switch submodule; and the second control module is configured to control the third switch submodule, so that the first control module inputs, in a second state, the reference signal to the first phase detector, and is configured to control the third switch submodule, so that the first control module inputs, in a first state, the first energy transmission signal to the first phase shifter.

11. The apparatus according to claim 8, wherein the first energy transmission module further comprises the second control module and a first phase shifter;

the first power divider is connected to the first array element by using the first phase shifter; the second control module is separately connected to the first phase detector and the first control module; the first phase detector is further configured to input the first phase difference to the second control module; the second control module is configured to send the first phase difference to the first control module; the first control module is configured to: perform time reversal processing based on the first phase difference to obtain first phase shift information, and send the first phase shift information to the second control module; the second control module is further configured to control the first phase shifter based on the first phase shift information to perform phase shift processing on the third energy transmission signal output by the first power divider; and the first phase shifter is configured to input a third energy transmission signal on which phase shift processing is performed to the first array element.

12. The apparatus according to any one of claims 2 to 11, wherein the first energy transmission module further comprises a first power amplifier; and the first control module is connected to the first power divider by using the first power amplifier, and the first power amplifier is configured to amplify the first energy transmission signal output by the first control module.

13. The apparatus according to claim 12, wherein an amplification factor of the first power amplifier is equal to a ratio of energy of the first energy transmission signal to energy of the second energy transmission signal.

14. A charger, comprising the apparatus according to any one of claims 1 to 13.

15. A terminal device, comprising the apparatus according to any one of claims 1 to 13.

16. A wireless power transfer method, applied to a wireless power transfer apparatus, wherein the wireless power transfer apparatus comprises a first control module, a first energy transmission module, and a second energy transmission module;

the first control module is connected to the first energy transmission module, and the first energy transmission module is connected to the second energy transmission module; and the method comprises:

inputting, by the first control module, a first energy transmission signal to the first energy transmission module; and inputting, by the first energy transmission module, a second energy transmission signal to the second energy transmission module, wherein the second energy transmission signal is obtained based on the first energy transmission signal, and both the first energy transmission signal and the second energy transmission signal are used to supply power to a target device.

**17.** The method according to claim 16, wherein the first energy transmission module comprises a first power divider;

the first control module is connected to the first power divider, and the first power divider is connected to the second energy transmission module; and
the method comprises:

inputting, by the first control module, the first energy transmission signal to the first power divider; and
dividing, by the first power divider, the first energy transmission signal into the second energy transmission signal and a third energy transmission signal, and inputting the second energy transmission signal to the second energy transmission module, wherein the third energy transmission signal is used to supply power to the target device.

Target device 100

Sensor array
200

Array element 300        Array element 300        Array element 300

FIG. 1

EP 4 350 945 A1

Target device

Energy transmission signal

Energy transmission signal

Energy transmission signal

First energy transmission module 500

Second energy transmission module 600

...

Energy transmission module

Wireless power transfer apparatus 1000

Energy transmission signal

First control module 400

Communication module 700

FIG. 2

FIG. 3

FIG. 4

FIG. 5

Transmission signal

Component control

FIG. 6

## INTERNATIONAL SEARCH REPORT

| International application No. |
| --- |
| **PCT/CN2021/103792** |

**A. CLASSIFICATION OF SUBJECT MATTER**

H02J 50/10(2016.01)i; H02J 7/00(2006.01)i

According to International Patent Classification (IPC) or to both national classification and IPC

**B. FIELDS SEARCHED**

Minimum documentation searched (classification system followed by classification symbols)

H02J50/-;H02J7/-

Documentation searched other than minimum documentation to the extent that such documents are included in the fields searched

Electronic data base consulted during the international search (name of data base and, where practicable, search terms used)

CNABS; CNTXT: 鉴相, tr+, 时间反演, 相位, trm, 阵元, 无接触, 非接触, 天线, 阵列, 无线, 级联, 移相, 扩容, 损耗, VEN; CNTXT: time reversal, array+, PTU, WPT, capacity, wireless

**C. DOCUMENTS CONSIDERED TO BE RELEVANT**

| Category* | Citation of document, with indication, where appropriate, of the relevant passages | Relevant to claim No. |
| --- | --- | --- |
| X | CN 109687602 A (CHONGQING UNIVERSITY) 26 April 2019 (2019-04-26) description, paragraphs 0002-0062, and figures 1-5 | 1-2, 12-17 |
| A | CN 112106268 A (OSSIA INC.) 18 December 2020 (2020-12-18) entire document | 1-17 |
| A | CN 106602746 A (UNIVERSITY OF ELECTRONIC SCIENCE AND TECHNOLOGY OF CHINA) 26 April 2017 (2017-04-26) entire document | 1-17 |
| A | JP 2016187260 A (FURUKAWA ELECTRIC CO., LTD.) 27 October 2016 (2016-10-27) entire document | 1-17 |
| A | CN 109586383 A (GOERTEK TECHNOLOGY CO., LTD.) 05 April 2019 (2019-04-05) entire document | 1-17 |
| A | US 20200336015 A1 (OSSI-N OSSIA INC.) 22 October 2020 (2020-10-22) entire document | 1-17 |
| A | CN 206685940 U (ZHONG HUI POWERISE WIRELESS POWER TECHNOLOGY CO., LTD.) 28 November 2017 (2017-11-28) entire document | 1-17 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 August 2021** | **18 September 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/103792**

**C.    DOCUMENTS CONSIDERED TO BE RELEVANT**

| Category* | Citation of document, with indication, where appropriate, of the relevant passages | Relevant to claim No. |
|---|---|---|
| A | CN 111934446 A (UNIVERSITY OF ELECTRONIC SCIENCE AND TECHNOLOGY OF CHINA) 13 November 2020 (2020-11-13) entire document | 1-17 |

**INTERNATIONAL SEARCH REPORT**
**Information on patent family members**

International application No.

**PCT/CN2021/103792**

| Patent document cited in search report | | | Publication date (day/month/year) | Patent family member(s) | | | Publication date (day/month/year) |
|---|---|---|---|---|---|---|---|
| CN | 109687602 | A | 26 April 2019 | None | | | |
| CN | 112106268 | A | 18 December 2020 | EP | 3785346 | A1 | 03 March 2021 |
| | | | | KR | 20210003863 | A | 12 January 2021 |
| | | | | WO | 2019209294 | A1 | 31 October 2019 |
| | | | | US | 10361595 | B1 | 23 July 2019 |
| CN | 106602746 | A | 26 April 2017 | CN | 106602746 | B | 14 May 2019 |
| JP | 2016187260 | A | 27 October 2016 | None | | | |
| CN | 109586383 | A | 05 April 2019 | CN | 209267242 | U | 16 August 2019 |
| US | 20200336015 | A1 | 22 October 2020 | None | | | |
| CN | 206685940 | U | 28 November 2017 | None | | | |
| CN | 111934446 | A | 13 November 2020 | None | | | |

Form PCT/ISA/210 (patent family annex) (January 2015)